# EUROPEAN PATENT APPLICATION

(11) **EP 1 309 132 A1**
(43) Date of publication of application: **07.05.2003**
(21) Application number: 01941194.1
(22) Date of filing: 22.06.2001
(51) Int. Cl.: H04L 12/46, H04L 12/40, B60R 16/02

(54) **ON-VEHICLE GATEWAY**

(30) Priority: 30.06.2000 JP 2000198677; 27.09.2000 JP 2000293664; 16.10.2000 JP 2000314663; 27.10.2000 JP 2000328267
(71) Applicant: Sumitomo Electric Industries Co., Ltd., Osaka-shi, Osaka 541-0041 (JP)
(72) Inventor: TOKUNAGA, M., Osaka Works, Sumitomo Elec. Ind. Ltd, Osaka-shi, Osaka 554-0024 (JP); YOSHIDA, S., Osaka Works, Sumitomo Elec. Ind. Ltd, Osaka-shi, Osaka 554-0024 (JP)
(74) Representative: Cross, Rupert Edward Blount
(86) International application number: JP0105379
(87) International publication number: WO02003620

(57) **Abstract**

An on-vehicle gateway is provided that is interposed between a plurality of buses for transferring data, and that is capable of performing appropriate control according to situations.
(1) Data coming from one bus are analyzed to filter false data and unwanted data not to feed them to the other buses.
(2) When the state of an on-vehicle device is inquired, it is controlled according to the state of an IG power source whether the inquiry is to be made to the device or the on-vehicle gateway answers the inquiry by proxy.
(3) The response of the gateway is changed according to the place where a vehicle is traveling. For example, control is performed such that, while the vehicle is traveling on a local road, the transmission/reception of a mobile telephone is available by using a hands-free system, and that, while the vehicle is traveling on an expressway, the transmission/ reception of a mobile telephone is unavailable even by using the hands-free system.
(4) The response of the gateway is changed according to a driver. For example, if the years of driving experience of the driver is within one year, the gateway stops data transfer so that no television screen or navigation screen is displayed during driving, and that the transmission/ reception of the telephone by the hands-free system is unavailable.

## Description

### Technical Field

The present invention relates to an on-vehicle gateway, and particularly to an on-vehicle gateway interposed between a plurality of buses and used transferring data.

### Background Art

Japanese Unexamined Patent Application Publication No. 3-295397 discloses a multiplex transmitting method using a relay terminal that is located between a high-speed bus line and a low-speed bus line, and that has a protocol converting function. In this method, control data of a power window motor or the like that have been inputted into a local terminal located on the low-speed line, are transmitted over the low-speed bus line. These data are protocol-converted at the relay terminal. Thereafter, the data flow over the high-speed bus line. The data are protocol-converted at another relay terminal, and transmitted over the low-speed bus line up to another local terminal located there. Thereby, a load such as the power window motor or the like comes into operation.

Japanese Patent No. 2906039 discloses a vehicle electronic control device that performs data transfer between an engine control circuit (so-called traveling-system bus) and a utility control circuit (so-called information-system bus) by means of a gateway.

Hereinafter, the operation of a gateway will be described in more detail.

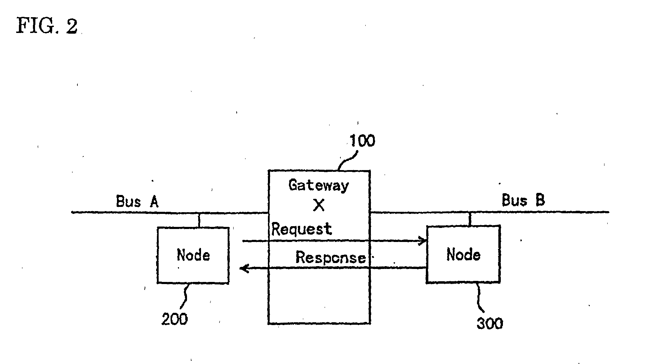

Figure 2 is a block diagram explaining an access made between nodes through a gateway.

A bus A and a bus B are connected on the opposite sides of a gateway 100. Assume a case where a node 200 connected to the bus A makes an access a node 300 connected to the bus B.

With the connection established through the gateway 100, data can be transferred between the bus A and the bus B, and the node 300 can respond to the access from the node 200.

For example, consider the case where a personal computer outside a vehicle checks a power window controller (a kind of node) as to whether the power window of the vehicle is open or closed. In such a case, the personal computer outside the vehicle accesses the gateway of the vehicle, and data are transferred from the gateway to an Intelligent Transport System (ITS) data bus. The data are transferred to an Original Equipment Manufacturer (OEM) bus through another gateway. Next, the data are sent to a control-system bus, and ultimately access is made to the power window Electronic Control Unit (ECU), which is connected to the control-system bus.

Of course, in the gateway, a process of certifying and verifying the contents of data packets is performed, thereby, onfirming a normal access.

In this manner, data transfer can be performed between a personal computer outside the vehicle and the power window ECU. Specifically, when the external personal computer requests the power window ECU to check the open/closed state, the power window ECU sends back a response. Thereby, the state of the power window can be checked from the outside. Here, the power window ECU has information inputted from a sensor for sensing the position of the window.

An on-vehicle gateway capable of performing appropriate control in a manner such as described above, is desired.

For example, suppose a vehicle is in a parked state, and an ignition (IG) power supply is in an OFF-state. In the case where the IG power supply is in an OFF-state in this manner, a method conventionally has been proposed in which access from the outside is detected in the gateway, and in which the power supply for a device in the vehicle is switched ON (wake-up) upon receipt of access from the outside. That is, when access from the outside is detected in the gateway, the data are sent to a power supply controller, and by turning on an accessory (ACC) power supply and the IC power supply, the power is supplied to other gateways and nodes.

Thereby, when access is made from the outside, the wake-up of the device is performed, and response to the access can be made.

In such a case, however, the inconvenience of battery exhaustion of the vehicle caused by the wake-up has occurred. This problem can be solved by bringing the engine of the vehicle into operation upon receipt of an access from the outside and making a response while generating electricity by an alternator. However, some parking areas are not necessarily suited to running the engine (e.g., closely-spaced narrow parking lots). There are also cases where it is difficult to bring the engine into operation.

In addition, for example, while the engine is running, the load of an engine control ECU increases, and while the brakes are applied, the load of an anti-lock brake system ECU increases. When access such as diagnosis is made from the outside under such increased load conditions, it may adversely affect the processing by ECUs.

### Disclosure of Invention

Conventional on-vehicle gateways can perform the protocol-conversion of data and the transfer of data. However, they are problematic in that they also transfer unwanted data, which are undesirable in terms of safety and security. Traveling-systems may be affected by transfer of such unwanted data, depending on the state of the vehicle.

It is an object of the present invention to provide an on-vehicle gateway capable of controlling the data to be passed.

It is another object of the present invention to provide an on-vehicle gateway capable of changing the responding method according to the state of a vehicle.

It is still another object of the present invention to provide an on-vehicle gateway capable of changing the response according to the traveling position of the vehicle.

It is a further object of the present invention to provide an on-vehicle gateway capable of changing the response according to a driver.

First, in the present invention, an on-vehicle gateway is one that connects at least two kinds of buses, and that performs data transfer and protocol conversion, and is characterized by checking the contents of data packets from one of the at least two kinds of buses, and determining whether the data packets are to be transferred to the other bus according to the contents.

The on-vehicle gateway may be characterized by preferably further comprising a monitor means of monitoring the state of a vehicle and limiting the data to be passed or changing a pass band, depending on the result of such monitoring.

Preferably, the monitor means may monitor the state of at least one of the power supply, the engine, the brake, the traveling state, the failed state of the on-vehicle devices, and the riding state of the driver of the vehicle.

The on-vehicle gateway with the above-described arrangements can prevent the transfer of unwanted data, as the on-vehicle gateway checks the contents of data packets and determines whether the data packets are to be transferred to the other bus.

Next, in the present invention, the on-vehicle gateway is characterized by being interposed among a plurality of buses and used for transferring data, and changing a response method according to the state of the vehicle.

The on-vehicle gateway is characterized by preferably being interposed between a network outside the vehicle and an on-vehicle bus for transferring data, and changing a response method according to the state of a vehicle.

Preferably, the on-vehicle gateway may be characterized in that it can change a response method according to the result of determining at least one of the states of whether the power supply is in an OFF-state, ACC-state or ON-state, whether the engine is in an ON-state or OFF-state, whether the brakes are applied or not applied, whether the vehicle is traveling or in a stopped state, and whether a driver is present or absent.

The state of the vehicle may be said to be the state of the load of a unit connected to the bus, and the on-vehicle gateway may respond by proxy when the load of the unit is large.

The on-vehicle gateway with these arrangements has no adverse effects on the unit even when the load of the unit connected to the bus increases.

Moreover, in the present invention, the on-vehicle gateway is characterized by being interposed between a plurality of buses and used for transferring data, and changing a response method according to the traveling position of the vehicle.

The on-vehicle gateway may be characterized by preferably further comprising a determining means for identifying a traveling position of the vehicle, and changing the response method in order to perform a specific control according to the traveling position of the vehicle.

Changing the responding method of the on-vehicle gateway in order to perform a specific control according to the traveling position of the vehicle in this manner enables the on-vehicle gateway to perform more appropriate control.

The on-vehicle gateway may be characterized by more preferably determining whether the traveling position of the vehicle is on a local road or on an expressway, and changing the response method based on the determination result.

Determining whether the traveling position of the vehicle is on a local road or on an expressway in this manner, and changing the response method based on the result, enables an on-vehicle gateway capable of performing more appropriate control according to the traveling position of the vehicle.

Furthermore, in the present invention, the on-vehicle gateway is characterized by being interposed between a plurality of buses for transferring data, and by changing a response method according to a driver.

The on-vehicle gateway may be characterized by preferably changing the response method according to the purpose of the driver of the vehicle.

Changing the response method in this manner according to the purpose of the driver of the vehicle enables an on-vehicle gateway to perform more appropriate control.

Preferably, the on-vehicle gateway may have a personal identification function such that the response method can be changed based on the identified information.

Providing the on-vehicle gateway with a personal identification function in this manner facilitates the identification of the driver.

According to another aspect of the present invention, the on-vehicle gateway for transferring data is characterized by being interposed between a plurality of buses, and changing a response method according to the purpose of a driver of a vehicle.

Changing the responding method of the on-vehicle gateway in this manner according to the purpose of the driver riding the vehicle makes it possible to provide an on-vehicle gateway capable of performing appropriate control according to the situation.

### Brief Description of the Drawings

Figure 1 is a block diagram showing a lineup of an on-vehicle system in one embodiment of the present invention.
Figure 2 is a block diagram for explaining an access made between nodes through a gateway.
Figure 3 is a block diagram for explaining the function of the gateway 100b shown in Figure 1.
Figure 4 is a flowchart showing a processing by the gateway shown in Figure 3.
Figure 5 is a flowchart showing another processing by the gateway.
Figure 6 is a flowchart showing still another processing by the gateway.
Figure 7 is a block diagram for explaining the response method of the gateway when an IG power source is in an ON-state.
Figure 8 is a block diagram for explaining the responding method of the gateway when an IG power source is in an OFF- state.
Figure 9 is a block diagram showing a lineup of the power supply system in a modification example of the present invention.
Figure 10 is a block diagram showing a lineup of an on-vehicle system in an embodiment in which the response method is changed according to the traveling position of a vehicle.
Figure 11 is a flowchart illustrating the operation of the gateway in the embodiment shown in Figure 10.
Figure 12 is a flowchart showing a specific example of operation of the gateway.
Figure 13 is a block diagram showing a lineup of an on-vehicle system in an embodiment in which the response method is changed according to a driver.
Figure 14 is a flowchart illustrating the operation of the gateway in the on-vehicle system shown in Figure 13.
Figure 15 is a flowchart showing the operation of the gateway in a modification example of the present invention.

### Best Mode for Carrying Out the Invention

### a) Controlling data to be passed.

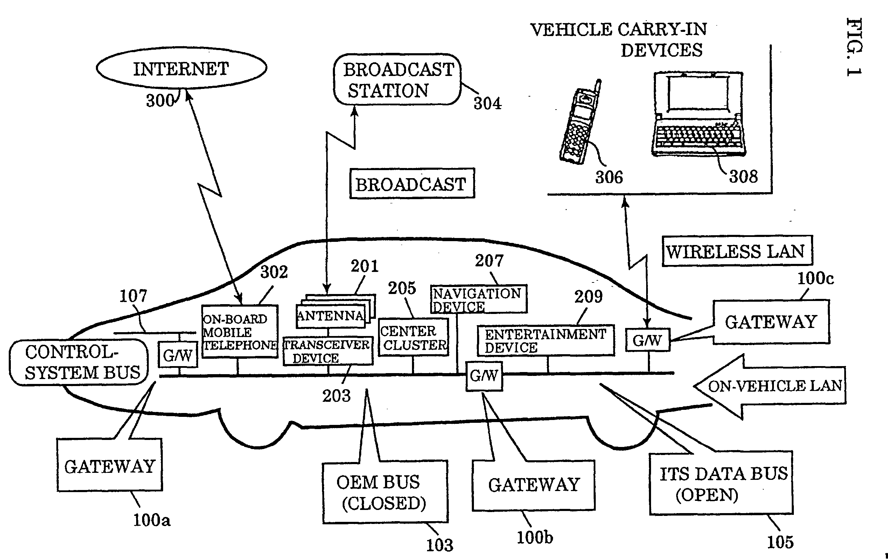

Figure 1 is a representation of the configuration of an on-vehicle system in one embodiment of the present invention. This on-vehicle gateway includes three buses: an OEM bus 103, an ITS data bus 105, and a control-system bus 107. The control-system bus 107 and the OEM bus 103 are connected by a gateway 100a. The OEM bus 103 and the ITS data bus 105 are connected by a gateway 100b.

Vehicle carry-in devices, such as a mobile telephone 306 and a personal computer 308 each of which uses a wireless LAN, and the ITS data bus 105 are connected by a gateway 100c.

A transceiver device 203, a center cluster 205, and a navigation device 207 are connected to the OEM bus 103. An antenna 201 is connected to the transceiver device 203. The transceiver device 203 receives a program of a broadcast station 304 through the antenna 201. Also, the connection to the Internet 300 is possible using an on-board mobile telephone 302.

The OEM bus 103 is a bus that is closed to a user, while the ITS data bus 105 is a bus that is opened to the user. Specifically, the OEM bus 103 is a bus whose setting is performed by a car maker, and which the user cannot freely change. On the other hand, the ITS data bus 105 is a bus whose setting such as addition/removal of devices can be freely changed by the user.

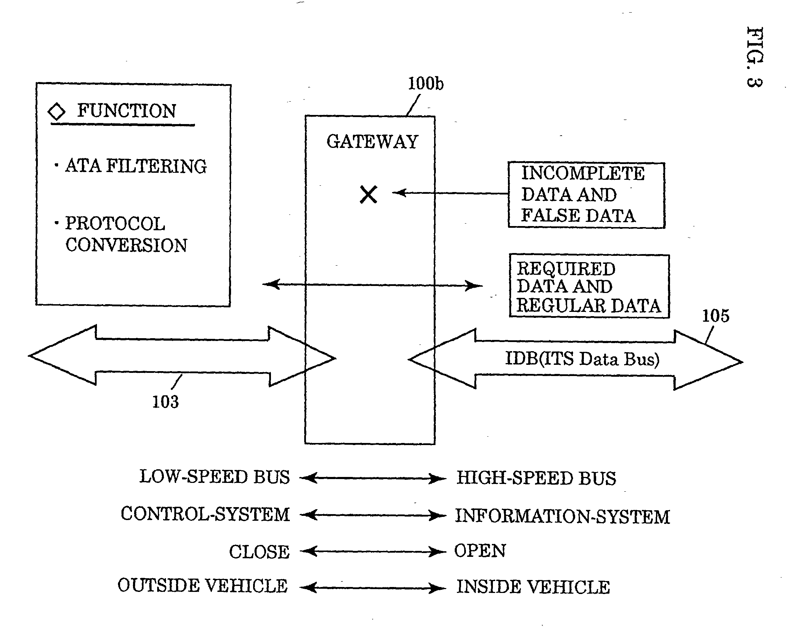

Figure 3 is a block diagram for explaining the function of the gateway 100b. The gateway 100b has a function of converting a protocol between the OEM bus 103 and the ITS data bus 105. The gateway 100b checks the contents of data packets sent to the OEM bus 103 and the ITS data bus 105, and determines, according to the contents, whether the data are to be transferred to other buses.

That is, control (data filtering) is performed such that only required data and regular data pass through the gateway 100b, and that incomplete data or false data does not pass through the gateway 100b. This makes it possible to secure traffic without passing unwanted data, and to prevent false accesses.

While the buses 103, and 105 have been described as buses that are closed and opened to a user, respectively, the present invention is also applicable to an arrangement in which the gateway connects low-speed and high-speed buses, control-system and information-system buses, or a bus outside the vehicle (a network constructed of mobile telephones or the like) and buses in the vehicle.

Possible data filtering methods for a gateway are as follows:
(1) The contents of data packets from a high-speed bus such as IEEE1394 or the like used e.g., for the information-system, are checked. Then, Cyclic Redundancy Check (CRC) and the like included in the data is checked, and the presence of any errors in the data is determined. If the data have any errors, the data are rejected.
(2) The contents of data packets are checked, and for example, a transmission node ID, a reception node ID, an operation code and an operand are identified. If control-system data such as to cause the engine to stop are sent from the information-system, these data are recognized as false data, and are therefore filtered and not to be transferred to the control-system.

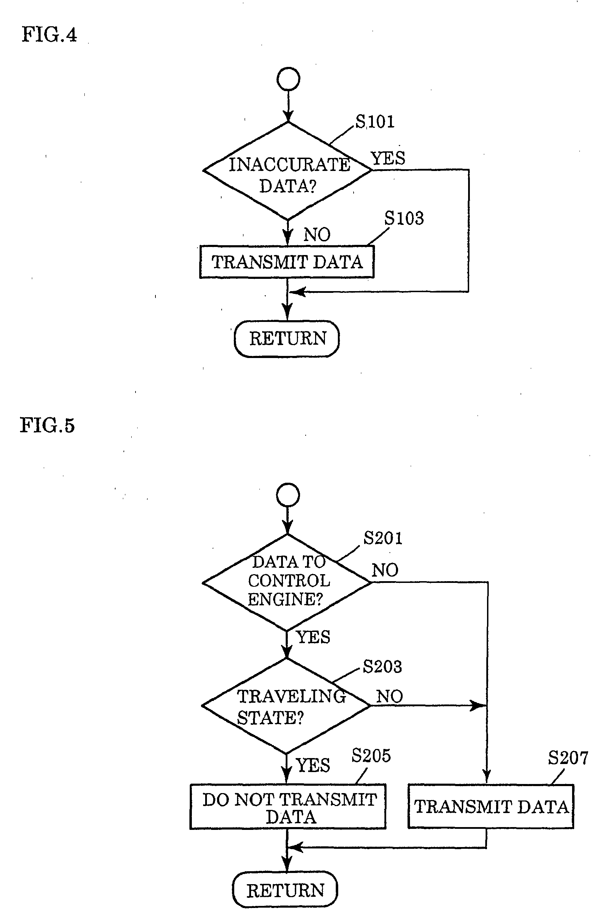

Figure 4 is a flowchart showing a processing performed by the gateway in this embodiment.

In step S101, the presence of any errors in the data of sent data packets is determined. If the result of step S101 is "YES", the data is not transferred, and this process is completed. On the other hand, if the data have no errors, the data is transferred to other buses in step S103.

### [Modification example]

The arrangement may be such that the state of the vehicle is monitored in the gateway, and that, based on the state of the vehicle, the attributes of the data allowed to pass through the gateway are restricted, or the pass band (data amount per unit time) is changed. This allows a fine-tuned traffic adjustment to be achieved, and enables an improved communication response.

Possible vehicle states to be monitored are as follows:
(1) The states of power supply, such as OFF, ACC, IG ON, identified by sensing the voltages of power supply lines for ACC and IG.
(2) A running state or a stopped state of the engine as determined by a signal from the engine control ECU or a signal which indicates a state of alternator (ALT-L).
(3) An operating state or a non-operating state of the brake as determined by sensing the applied voltage to a stop lamp.
(4) A traveling state or stopped state of the vehicle as determined by monitoring the vehicle speed pulses of a meter.
(5) Failure states of on-board electronic devices determined by monitoring a failure code or a diagnosis signal from each of the electronic devices.
(6) A riding state of an occupant determined by monitoring the signal of an occupant detecting sensor provided within a seat.

Possible gateway controls based on the state of the vehicle are as follows.

### EXAMPLE 1

In the case where there are a gateway for connecting an information-system bus and a control-system bus to which an engine control device is connected and a gateway for connecting the information bus to the outside, the data to control the engine are not transferred while the vehicle is traveling, but the data to control the engine are transferred while the vehicle is a stopped state.

Thereby, while the vehicle is in a stopped state, the engine can be started in advance to be warmed up, or an air conditioner can be brought into operation in advance for a comfortable interior environment. On the other hand, abrupt stopping of the engine during traveling is prevented.

Figure 5 is a flowchart showing a controlling method for the gateway in this example. Step S201 determines whether the data inputted into the gateway are data to control the engine. If the determination result in step S201 is "YES", step S203 determines whether the vehicle is traveling. If the determination result in step S203 is "YES", the data is not transferred to the other buses in step S205.

On the other hand, if the determination result of any of step S201 and step S203 is "NO", the transfer of the data is performed in step S207.

### EXAMPLE 2

In the arrangement comprising the bus and the gateway shown in above-described example 1, the gateway to connect the control-system bus and the information-system bus is designed to transfer diagnosis data for detecting failure only while the vehicle is in a stopped state, and not to transfer diagnosis data while the vehicle is traveling. This makes it possible to reduce the amount of data transfer of the information-system bus, and to improve the response of the devices connected to this bus. A similar effect can also be obtained by passing the diagnosis data only when an on-board device is out of order.

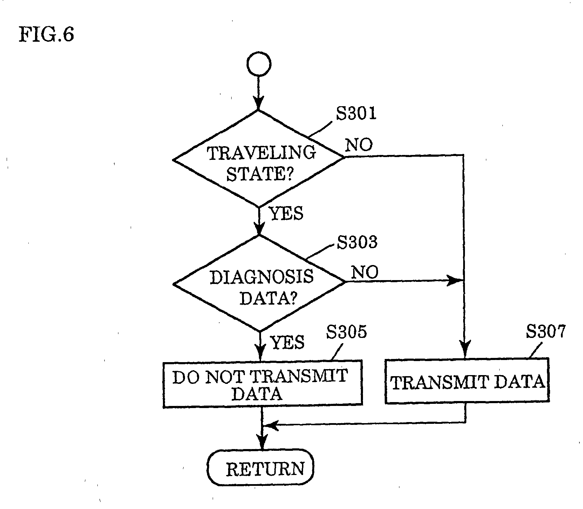

Figure 6 is a flowchart showing a controlling method for the gateway in this example 2. Step S301 determines whether the vehicle is traveling. If the determination result in step S301 is "YES", step S303 determines whether the data inputted into the gateway are diagnosis data. If the result of determination in step S303 is "YES", the transfer of the data of is not performed in step S305.

On the other hand, if the determination result of any of step S301 and step S303 is "NO", the transfer of the data is performed in step S307.

### EXAMPLE 3

In the arrangement comprising the bus and the gateway shown in above-described example 1, the filtering policy is changed according to the power supply state. Specifically, different operating devices operate in different power supply states. For example, devices related to traveling state (Anti-lock Brake System (ABS), engine control, transmission control) do not operate unless the ignition (IG) power supply is in an ON-state. On the other hand, an audio device or the like operates even if the power supply is in the state of ACC (i.e., accessory power supply is "ON"). Therefore, the amount of data transferred by the bus can be reduced by cutting down, in the gateway, data packets directed to devices that do not operate according to the power supply state. Also, the battery can be saved by changing the operation of the gateway according the power supply state. Furthermore, by detecting, according to the power supply state, whether a car is in an operating state, and changing the filtering policy, it is possible to enhance the reliability when required, while increasing the transfer effect.

### EXAMPLE 4

In the gateway that establishes the connection between the inside and the outside of the vehicle, the data amount transferred from the outside of the vehicle is adjusted according to the presence/absence of an occupant (driver or the like). For example, when downloading map data for navigation from the outside of the vehicle, the amount of data passing through the gateway per unit time is increased while the occupant is absent, and the amount of data flowing over the bus is reduced while the occupant is present, thereby decreasing the traffic amount. The communication response among the on-board devices can be enhanced, proportionally to the reduced traffic amount.

In this example, when an occupant is absent the car is considered to be not traveling. In this case, even if data is erroneously transferred, the influence thereof will be relatively small. This makes it possible to reduce certification and filtering processings in the gateway, and to increase the transfer efficiency.

On the other hand, when an occupant is present, the erroneous transfer has a large influence, and therefore, it is possible to increase the reliability rather than the transfer efficiency in the gateway, by carefully performing the certification and filtering processings.

Also, when the occupant is absent, the control-system devices requiring response from the on-board devices in real time are not considered to be in operation. In this case, relatively large data such as map data can be transferred through the gateway. When the occupant is present, however, the control-system devices are considered to be in operation, and therefore, the transfer of relatively large data such as map data can be decreased in the gateway to reduce the data amount of the bus.

### b) Changing response method according to vehicle state.

In this embodiment, the response method of the gateway is changed according to the state of the vehicle so as to have easy access to data or the like inside the vehicle, without the need of a significant increase in power consumption.

The on-vehicle gateway is located midway between two kinds of buses, and performs data transfer and protocol conversion. When access for acquiring information is made to a device that is connected from one bus side of two kinds of buses to the other bus side, a response is made to the access. In this embodiment, the response method is changed according to the vehicle state. The above-mentioned "one bus of two kinds of buses" may be a bus for transferring data to the outside of the vehicle using a mobile telephone or the like.

Two possible kinds of buses are, for example, a combination of a high-speed bus and a low-speed bus, that of a control-system bus and an information-system bus, that of a bus opened to a user and a bus closed to the user, or that of a bus in the vehicle and a bus outside the vehicle (i.e., a network constituted of mobile telephones or the like).

The kinds of buses, however, are not limited to two kinds, but many kinds of buses may be used. Also, the plurality of buses connected by the on-vehicle gateway may use the same protocol. In this case, the on-vehicle gateway does not perform protocol conversion, but it checks the contents of packets and determines whether the packets are to be passed (firewall function).

In this embodiment, when the IG power supply of the vehicle is in an ON-state, data transfer is performed between the node of the power window ECU or the like and an external personal computer or the like, as in conventional cases. Namely, the node of the power window ECU or the like responds back to the request from the external personal computer or the like.

On the other hand, when the IG power supply is in an OFF-state, the gateway makes a response in place of the node of the power window ECU or the like. For this purpose, the gateway receives information on the internal state of the node of the power window ECU or the like, when, for example, the IG power supply is to be switched from an ON-state to an OFF-state. Thereby the gateway acquires the information thereon before the IG power supply is put into an OFF-state. Based on this, the gateway makes a response as a proxy for the power window ECU or the like.

The following is one method by which the gateway acquires the information before the IG power supply enters an OFF-state. The gateway regularly accesses to the state of each node in advance, and based on the results thereof, continues on to update a node state table held in the gateway. The period of time during this regular access is preferably changed according to the data. For example, if the lighting state of a head light, the state of a door lock or the like, which is a relatively infrequent change, is acquired every 10 seconds, and if information on the position of the vehicle or the like, which changes relatively fast, is acquired every 1 second, there is not a significant increase in the traffic of data. Here, it is desirable that the information to be acquired from the nodes is restricted to information requiring response based on an access from the outside with the IG power supply in an OFF-state.

In this embodiment, when the IG power supply is in an OFF-state, the gateway makes a response by proxy, but when the IG power supply is in an ON-state, each of the nodes makes a response in the usual manner. At this time, the gateway filters data as required, and exclusively transfers problem-free data.

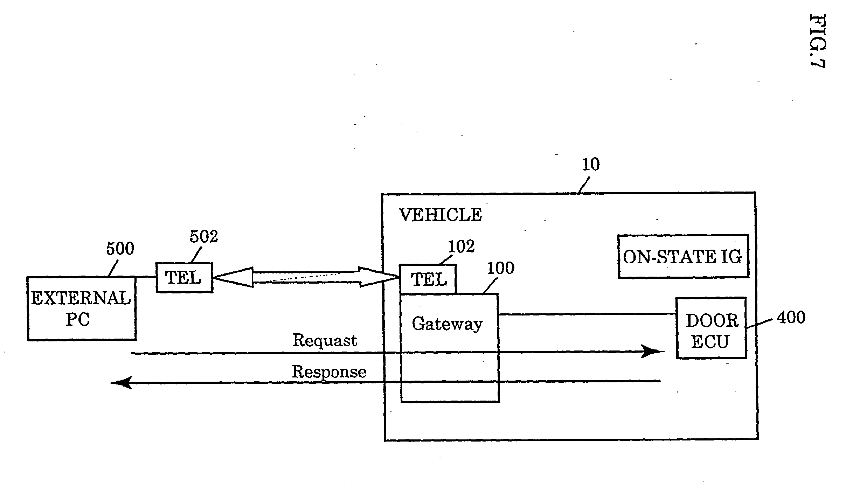

Figure 7 is a representation explaining the flow of data when the IG power source is in an ON-state. A gateway 100 is mounted on a vehicle 10. Hence, assume that the gateway 100 is located between two kinds of buses. For example, a door ECU 400 of the vehicle is connected to one of the buses. A wireless telephone 102 is connected to the other bus.

Under this situation, suppose that a personal computer 500 existing outside the vehicle 10 accesses the gateway 100 of the vehicle 10 by a wireless telephone 502 connected to the personal computer 500 in order to detect the opening/closing state of the vehicle door via the door ECU 400.

Upon receipt of the data request from the external personal computer 500, the gateway 100 recognizes that the IG power supply of the vehicle is in an-ON state, and based on the recognition, sends the request to the door ECU 400. Then, response data is sent from the door ECU 400 to the external personal computer 500 through the gateway 100.

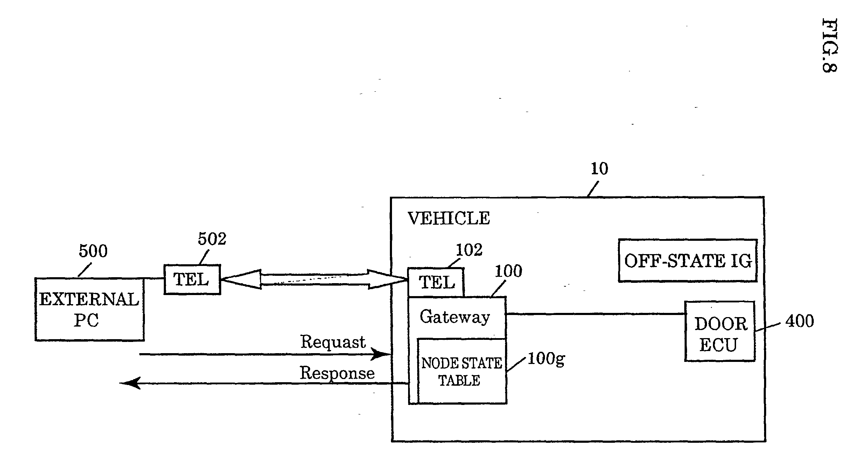

Figure 8 is a block diagram for explaining the flow of data when an IG power source is in an OFF-state.

The gateway 100 is designed to have a node state table 100g (storage means) and to regularly store the state of each node.

When the gateway 100 receives the request for notifying of the opening/closing state of the vehicle door, from the external personal computer 500 through the wireless telephone 502 and 102, the gateway 100 recognizes that the IG power supply is in an-OFF state, and based on the recognition, refers the portion corresponding to the door ECU 400 in the node state table 100g, without sending the request to the door ECU 400. Then, based on the reference result, the gateway 100 responds by sending the opening/closing state of the door to the external personal computer 500.

### [Modification example]

In the above-described embodiment, since the current power supply system of a vehicle is adopted, it is not possible to notify the gateway of the OFF-state of the IG power supply. For this reason, in the above-described embodiment, the arrangement is such that node information is regularly acquired. However, by changing the power supply system from the current one, it is possible to provide a system which has a similar effect without regularly acquiring node information.

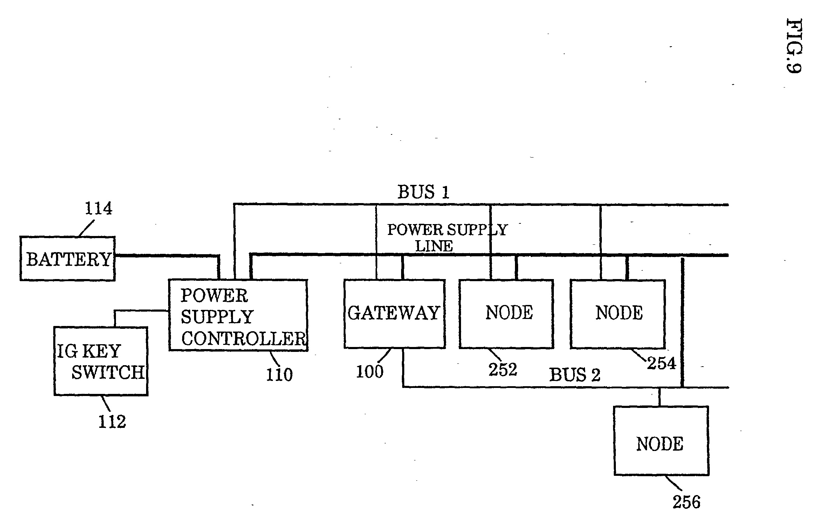

Figure 9 is a block diagram showing a lineup of the power supply system in a vehicle using the on-vehicle gateway in a modification example of the present invention. This system includes a battery 114, an IG key switch 112, a power supply controller 110, a gateway 100, and nodes 252 to 256 provided in the vehicle. The power supply from the battery 114 is first sent to the power supply controller 110, and is supplied to the gateway 100 and each of the nodes 252 to 256 via the power supply controller 110.

The power supply controller 110, the gateway 100, and the nodes 252 and 254 are interconnected by a bus 1, and the node 256 and the gateway 100 are connected by a bus 2.

The power supply controller 110 turns the power supply ON or OFF, according to an IG key signal sent from the IG key switch 112. When the IG power supply is to be turned OFF, upon receipt of the input of the IG key signal, the power supply controller 110 makes a request of each of the nodes for the confirmation of the power supply OFF. When each of the nodes confirms that the power supply may be turned OFF, each of the nodes sends a confirmation response of the power supply OFF accordingly.

At this time, the gateway additionally requests the respective nodes to send their node information. When the gateway receives all node information from each of the nodes, or after a predetermined time, the gateway 100 sends the confirmation response of the power supply OFF to the power supply controller 110. After ascertaining that the above-described conditions have been satisfied, the power supply controller 110 completes the power supply.

In this system, in order to obtain node information, it is unnecessary for the gateway to regularly acquire information when the IG power supply is in the ON-state. In other words, the gateway needs to acquire information only once when the IG power supply becomes in the OFF-state. This results in reduction of traffic of the buses and processing loads of the nodes and the gateway.

In the above-described embodiment, the response manner of the gateway is designed to change according to whether the IG power supply is in an ON-state or OFF-state. Alternatively, however, the response of the gateway may be changed under the following conditions.
(1) The response of the gateway changes according to whether the engine is in an ON-state or OFF-state. When the engine is in an ON-state, it is considered that, because the vehicle is traveling, the loads of the traveling-system devices increase. Under such a state, the processings of the traveling-system devices might be adversely affected if diagnosis (failure diagnosis) of the traveling-system devices is performed from the outside.
   Therefore, when the engine is in an ON-state, the gateway responds by proxy. In such a case, diagnosis data are transferred in advance into the gateway for storage there, and the data within the gateway are updated at regular intervals or when a change in the diagnosis data of any of the nodes occurs.
(2) The response of the gateway changes according to whether the brakes are applied. When the brakes are applied, it is considered that the processing load of the anti-lock brake system (ABS) ECU increases. Under such a state, the processings of the traveling-system devices might be adversely affected if diagnosis of the anti-lock brake system (ABS) ECU is performed from the outside. In such a case, therefore, the gateway responds by proxy as in the case of (1).
(3) The traveling or stopped state of the vehicle is monitored, and according to the result, the response of the gateway changes. In this case, the traveling or stopped state of the vehicle can be detected, by a signal from a speedometer, a wheel speed pulse signal or the like. When the vehicle is traveling, because the loads of the traveling-system devices are large, data are stored within the gateway as in the case of (1), and a response is made without making an inquiry to each of the nodes.
(4) The presence of a driver in the vehicle is detected based on the signal of an occupant detecting sensor mounted in the driver' seat or the like of the vehicle. When a driver is present, the vehicle is regarded as being traveling, and the gateway responds to a request by proxy as in the case of (1).
   The descriptions in the above-described embodiment were made of processings in which an access is made from the outside of the vehicle to the inside thereof. However, the present invention is also applicable in the case where access is made from one node to another node in the vehicle through the gateway.

### c) Changing response according to traveling position of vehicle

In a system equipped with a gateway similar to that described in (b), when the response of the gateway is changed according to the traveling position of the vehicle, the operation of the system can be changed according to the traveling position of the vehicle, thereby enhancing convenience.

The data on a traveling point can be acquired by the gateway obtaining data from a Global Positioning System (GPS) device connected to the bus. It is also possible for the gateway to acquire data on a traveling point received by a mobile telephone or a PHS (Personal Handyphone System), via the bus. The position information obtained by these methods is compared with a map data base prepared in advance, and the region in which the vehicle is traveling is ascertained by the gateway.

If the traveling position of the vehicle is determined, the handling policy in the gateway is determined based on a control table for every region (country or the like) that is prepared in the gateway in advance, and based on the result, the handling of the gateway is changed.

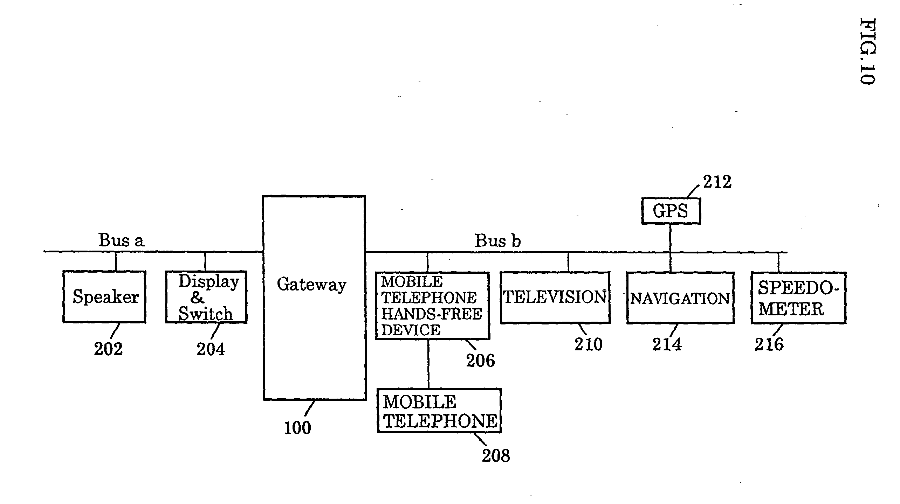

Figure 10 is a block diagram showing a lineup of an on-vehicle system according to one embodiment of the present invention. This on-vehicle system includes a bus a and a bus b.

Connected to the bus a, are a speaker 202 and a display 204 having various switches. Connected to the bus b, are a GPS device 212, a navigation device 214, a television 210, a speedometer 216, a mobile telephone hands-free device 206, and a mobile telephone (or alternatively PHS) 208.

The gateway 100 is located midway of buses a and b. The gateway 100 has a filtering function of filtering and denying transfer of unwanted data, a proxy function of converting data format in the data transfer between buses, and a buffering function of buffering data.

Here, a description will be made of the processing when sending map screens produced by the navigation device 214 connected to the bus b to the display 204 connected to the bus a. First, the navigation device 214 transmits data to the gateway 100, and the gateway 100 transfers the data to the bus a. The display 204 connected to the bus a receives the data, and displays the data on a screen. In order to prevent the navigation map screen from being shown on the display 204, the data related to the screen display data must be filtered in the gateway 100 and denied transfer.

Likewise, displaying or non-displaying of the television screen on the display 204 can be controlled by non-filtering or filtering in the gateway 100 with respect to the screen data from the television 210.

With regard to the mobile telephone 208, a notification of an incoming telephone call can be controlled, based on whether the vocal data is filtered in the gateway 100. Similarly, determination as to the release of a speed warning can be made by the gate way 100 depending on whether beep tone data from the speedometer 216 is transferred.

In this embodiment, the traveling location of the vehicle is determined by communication by means of the GPS device 212 or the mobile telephone 208. The response of the gateway changes according to the traveling location. By such processing, the operation of the system can be changed appropriately to suit to the traveling location of the vehicle (e.g., the country, prefecture, city, state, or road where the vehicle is traveling).

For example, assume the case where a particular region has the following rules, and another regions dose not.
(1) During traveling of a vehicle, a television screen must not be shown on the display.
(2) During traveling, a navigation map must not be shown on the display.
(3) During traveling, a mobile telephone call must not be received.
(4) If a vehicle exceeds a certain specified speed limit, a speed warning must be given.

In this embodiment, the gateway acquires information on the traveling point of the vehicle from the GPS or the mobile telephone (or PHS) or the like, and based on this traveling position information, the response method of the gateway changes. This allows the gateway to perform control corresponding to the above-described rules.

Also, in this embodiment, since the control method can be changed by changing the response in the gateway, it is unnecessary to change the control in individual devices. Therefore, even when an inexpensive control device for use in a car is used, appropriate control can be executed.

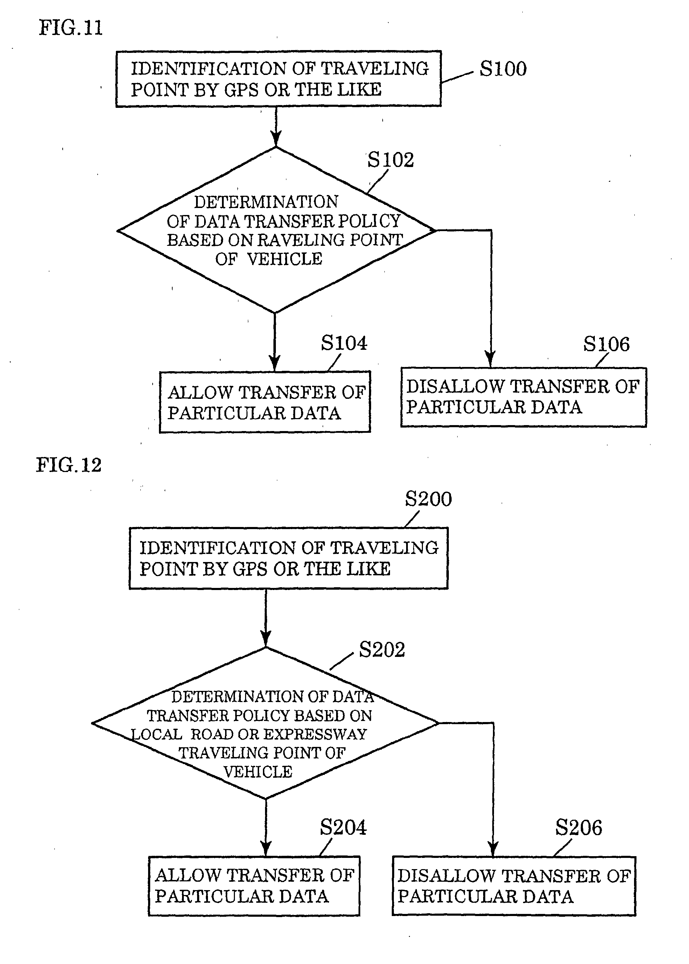

Figure 11 is a flowchart showing the operation of the gateway in this embodiment. In step S100, the identification of the traveling point of the vehicle is performed using the GPS device 212 or the like. In step S102, the transfer of particular data is allowed (S104) or disallowed (S106) according to the traveling point of the vehicle.

Thus, in this embodiment, changing the data transfer policy in the gateway appropriately to suit the traveling point of the vehicle enables fine control for the traveling point of the vehicle.

In this embodiment, for example, in step S200 as shown in Figure 12, the traveling point of the vehicle is identified using the GPS device 212 or the like as to whether it is on a local road or an expressway. Then, in step S202, the transfer of particular data can be allowed (S104) or disallowed (S106) according to the traveling point of the vehicle. Thereby, the response method of the gateway can be changed depending on whether the traveling point of vehicle is on a local road or an expressway.

On an expressway, a vehicle travels faster than on a local road. Therefore, more stringent safety measures are required on an expressway. Hence, a more safety system can be provided in which, for example, control is performed such that, while the vehicle is traveling on a local road, the transmission/reception of a mobile telephone can be performed by a hands-free system, and that, while the vehicle is traveling on an expressway, the transmission/ reception of a mobile telephone cannot be performed at all, including the hands-free system.

The navigation device 214 identifies whether the road on which the vehicle is traveling is an expressway or a local road. The gateway, therefore, can recognize, by obtaining data from the navigation device 214, whether the road on which the vehicle is traveling is an expressway or a local road.

Besides the navigation device, the traveling position may be determined based on information from Electronic Toll Collection (ETC) provided on an expressway.

If the gateway 100 recognizes that the vehicle is traveling on an expressway, it is possible to prevent the driver from recognizing an incoming call of the mobile telephone by filtering the vocal data of the telephone in the gateway and deny transfer to the speaker 202. Also, it is possible to prevent hands-free operation by filtering the data thereof in the gateway when a setting screen for use in hands-free operation is to be sent from the mobile telephone hands-free device 206 to the display 204.

Besides an expressway, on a dangerous mountain path, a road with many pedestrians, a railroad crossing, or the like, similar handling is possible.

### d) Changing response according to driver.

In a system equipped with a gateway similar to that described in (b), when the response manner of the gateway is changed according to a type of a driver or occupant, or the like, the operation of the system can be changed to suit a driver or the like, thereby enhancing convenience.

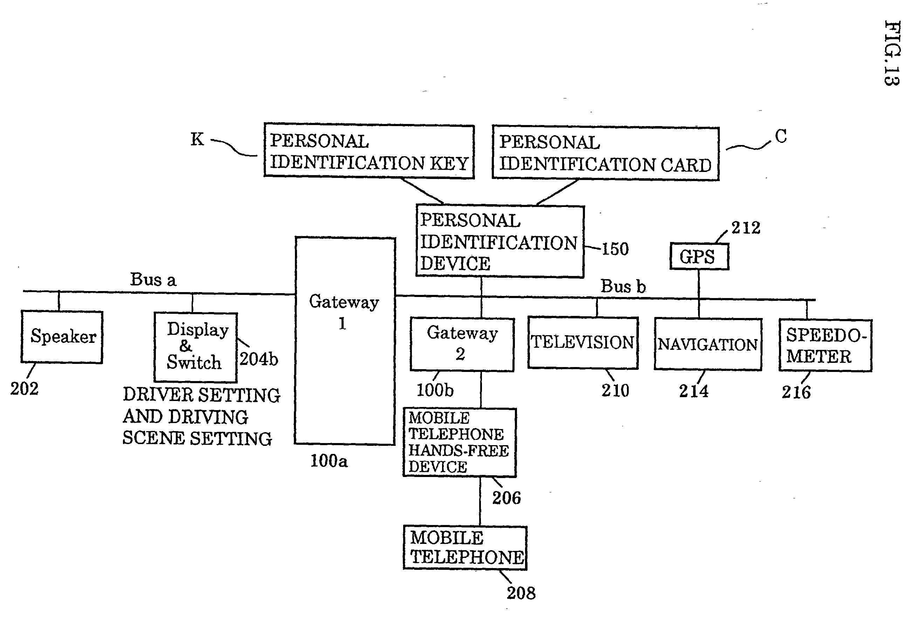

Figure 13 is a block diagram showing a lineup of an on-vehicle system in one embodiment of the present invention. This on-vehicle system includes the bus a and the bus b.

Connected to the bus a, are the speaker 202 and the display 204 having various switches. Connected to the bus b, are the GPS device 212, the navigation device 214, the television 210, the speedometer 216, a personal identification device 150, and a gateway 100b. The mobile telephone hands-free device 206 and the mobile telephone 208 are connected to the gateway 100b.

A gateway 100a is located midway of buses a and b. The gateway 100a has a filtering function for filtering to deny transfer of unwanted data, a proxy function of converting data format in the data transfer between buses, and a buffering function for buffering data.

The processing for sending map screens produced by the navigation device 214 connected to the bus b to the display 204 connected to the bus a is as described in c). The control of an incoming telephone call of the mobile telephone 208, and the control of beep tones from the speedometer 216 also have already been described in c).

There is a key for each occupant (i.e., personal identification key) K or a personal identification card C for identifying a person. A personal identification device 150 on the vehicle side reads it, or the occupant inputs or selects information for identifying himself (i.e., ID name, or the like) on the on-board display, and thereby the recognition of the current driver is performed.

Then, based on the attributes for every individual person (years of driving experience, age, sex, and others) that have already been registered in advance, for example, the years of driving experience of the current driver is identified. If the period of driving experience is less than one year, the gateways 100a and 100b stop data transfer so that no television screen or navigation screen is displayed during driving, and so that the transmission/reception of the telephone by the hands-free system is unavailable.

On the other hand, for example, when it is recognized that the amount of driving experience of the current driver is ten years or more, a data transfer is performed in the gateways 100a and 100b to display a navigation screen on the display 204, and perform transmission/reception of the mobile telephone by the hands-free system. The change of the gateway policy can be made not only based on the attributes of the driver, but also for every particular individual person. For example, control may be performed such that a speed warning is given to a particular individual person, and not given to another person.

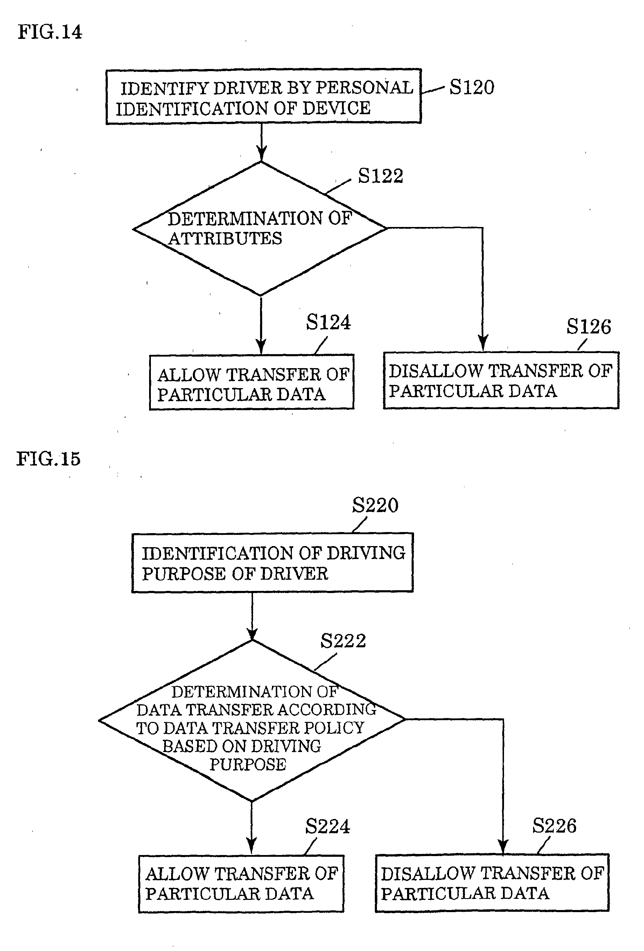

Figure 14 is a flowchart illustrating the operation of the gateway in this embodiment. In step S120, the identification of a driver is performed using the personal identification device 150. In step S122, the attributes of an individual person are determined, and according to the result, the transfer of a particular data is allowed (S124) or disallowed (S126).

Thus, in the present embodiment, changing the data transfer policy in the gateway to suit to the attributes of the driver, allows fine control that is appropriate for the driver.

### [Modification example]

In the above described embodiment, the gateway control changes for each individual person. In this modification example, however, even when the same individual person uses a vehicle, the gateway control changes with the change in situations (driving purpose and environment).

Figure 15 is a flowchart showing the operation of the gateway in a modification example of the present invention. In step S220, the identification of the driving purpose of the driver is performed. In step S222, the transfer policy of data is determined based on the driving purpose, and according to the result, the transfer of a particular data is allowed (S224) or disallowed (S226).

Thus, in this embodiment, changing the data transfer policy in the gateway so as to suit to the driving purpose of the driver, enables fine control that is appropriate for the purpose of the driver.

According to this modification example, the operation of the gateway can be changed, for example, depending on whether the vehicle is used for a private purpose or business purpose where the same vehicle is used by the same driver.

For example, while the driver is using the vehicle for business purposes, the access from a computer on the ground to data on a traveling route of the vehicle is allowed. On the other hand, while the driver is using the vehicle for private purposes, the access from a computer on the ground to the data on a traveling route of the vehicle is disallowed.

Specifically, according to the driving environment, while the vehicle is used for business purposes, the data on the traveling route are transferred from the navigation device 214 to the mobile telephone 208 side through the gateway 100b, and are sent to the ground side via the mobile telephone 208. On the other hand, while the vehicle is used for private purposes, the data are interrupted in the gateway 100b so as not to respond to the access from the outside.

Use of the vehicle for business or private purposes by the driver can be recognized by the driver through selective input via a switch of the vehicle display, or by having a special card read by a card reader.

Thereby, while the vehicle is used for private purposes, the privacy of the driver is protected, and while the vehicle is used for business purposes, access to data is made possible, thereby enhancing the convenience of vehicle management.

The identification of an individual person may be performed by reading the data that appears on a motor vehicle drivers license, a cash card, a credit card, an ID card, or the like. Also, the steps shown in Figures 14 and 15 may be executed by a single gateway.

It is to be understood that the present embodiments disclosed here are illustrative but not restrictive in all respects. It is intended that the scope of the present invention is defined by the claims rather than the above descriptions, and that the claims cover meanings equivalent to the claims and all changes and modifications within the scope of the present invention.

### Industrial Applicability

1) By performing the control of data in the gateway, the penetrating of false data packets and the like can be prevented. Since unwanted data packets are not fed over buses, the traffic amount can be reduced, thereby allowing an improvement in response.
   Furthermore, by monitoring the state of the vehicle, and finely adjusting data that passes through the gateway according to the vehicle state, the penetrating of false data packets can be prevented more thoroughly, thereby enhancing reliability. Furthermore, the amount of buses traffic can also be reduced.
   How the vehicle state and the data filtering policy of the gateway are considered depends on the conception of the system configuration. In any case, however, it is possible to enhance the transfer effect while securing reliability when required by changing the data filtering policy according to the vehicle state.
2) It is possible to easily access data or the like within the vehicle without the need to significantly increase power consumption by changing the responding method of the gateway according to the vehicle state. As a result, exhaustion of the battery can be prevented. Also, even when the load of a unit connected to the bus increases, the unit can be prevented from being thereby adversely effected.
3) Fine control of vehicle devices can easily be performed in a manner suitable for the traveling location of the vehicle. Moreover, no special operation of the individual devices (display, speaker, navigation device and others) is required. They have only to operate as usual. In the manner described above, it is possible to make a suitable control of various devices by stopping transfer of data in the gateway. This eliminates the need for controlling devices individually to suit the traveling location, and enables control suited for situations even with inexpensive devices for use in a car.
4) Fine control of vehicle devices suited for each individual person can be performed.
   It is possible to cope with control of various devices by stopping transfer of data in the gateway. This eliminates the need for controlling individually in order to suit an individual person of each individual device, and enables control suited for an individual person and situations even with inexpensive devices for use in a car.

## Claims

1. An on-vehicle gateway interposed between a plurality of buses for transferring data, said on-vehicle gateway checking the contents of data packets from one of said buses, and determining whether the data packets are to be transferred to other buses according to the contents.

2. An on-vehicle gateway according to claim 1, further comprising monitor means for monitoring the state of a vehicle, wherein, data to be passed can be limited, or a pass band can be changed by said on-vehicle gateway, depending on the result of monitor by said monitor means.

3. An on-vehicle gateway according to claim 2, wherein said monitor means monitors the state of at least one of the power supply, the state of the engine, the state of the brake, the traveling state, the failed states of the on-vehicle devices, and the riding state of the driver of said vehicle.

4. An on-vehicle gateway for transferring data interposed between a plurality of buses, said on-vehicle gateway changing a response method according to the state of the vehicle.

5. An on-vehicle gateway for transferring data interposed between a network outside a vehicle and an on-vehicle bus, said on-vehicle gateway changing a response method according to the state of the vehicle.

6. An on-vehicle gateway according to claim 4 or 5, wherein at least one of the state of the power supply, the state of the engine, the state of the brake, the traveling state, and the riding state of a driver is determined as states of said vehicle, and wherein a response method is changed based on the determination result.

7. An on-vehicle gateway according to any of claims 4 - 6, wherein the state of said vehicle is the state of the load of a unit connected to said bus, and wherein said on-vehicle gateway responds by proxy when the load of said unit is large.

8. An on-vehicle gateway for transferring data interposed between a plurality of buses, said on-vehicle gateway changing a response method according to the traveling location of the vehicle.

9. An on-vehicle gateway according to claim 8, further comprising a determining means for identifying the traveling position of said vehicle, wherein the response method is changed for performing a specific control according to the traveling location of said vehicle.

10. An on-vehicle gateway according to claim 8 or 9, wherein the traveling location of said vehicle is determined to be on a local road or on an expressway, and wherein the response method is changed based on the determination result.

11. An on-vehicle gateway interposed between a plurality of buses and used for transferring data, said on-vehicle gateway changing a response method according to a driver.

12. An on-vehicle gateway according to claim 11, wherein the response method is changed according to the purpose of the driver of a vehicle.

13. An on-vehicle gateway according to claim 11 or 12, further comprising a personal identification function, wherein the response method is changed based on the identified information.

14. An on-vehicle gateway interposed between a plurality of buses and used for transferring data, said on-vehicle gateway changing a response method according to the purpose of a driver of a vehicle.

## Amended claims

### Amended claims under Art. 19.1 PCT

**1.** (Amended) An on-vehicle gateway interposed between a plurality of buses and used transferring data, said on-vehicle gateway comprising a monitor means for monitoring the state of a vehicle, and based on the result by said monitor means, limiting data to be passed, or changing a pass band.

**2.** An on-vehicle gateway according to claim 1, wherein said monitor means monitors the state of at least one of the power supply, the state of the engine, the state of the brake, the traveling state, the failed states of the on-vehicle devices, and the riding state of the driver of said vehicle.

**3.** An on-vehicle gateway for transferring data interposed between a plurality of buses, said on-vehicle gateway changing a response method according to the state of the vehicle.

**4.** An on-vehicle gateway for transferring data interposed between a network outside a vehicle and an on-vehicle bus, said on-vehicle gateway changing a response method according to the state of the vehicle.
